# EUROPEAN PATENT APPLICATION

(11) **EP 4 254 351 A1**
(43) Date of publication of application: **04.10.2023**
(21) Application number: 21896844.4
(22) Date of filing: 17.11.2021
(51) Int. Cl.: G06T 17/20

(54) **METHOD AND APPARATUS FOR PROCESSING NON-SEQUENTIAL POINT CLOUD MEDIA, DEVICE AND STORAGE MEDIUM**

(30) Priority: 26.11.2020 CN 202011347626
(71) Applicant: Tencent Technology (Shenzhen) Company Limited, Shenzhen, Guangdong, 518057 (CN)
(72) Inventor: HU, Ying, Shenzhen, Guangdong, 518057 (CN)
(74) Representative: Eisenführ Speiser
(86) International application number: PCT/CN2021/131037
(87) International publication number: WO 2022/111343

(57) **Abstract**

A method and an apparatus for processing non-sequential point cloud media, a device and a storage medium. Said method comprises: processing non-sequential point cloud data of a static object by means of a GPCC encoding mode, to obtain a GPCC bit stream (S302); encapsulating the GPCC bit stream to generate entries of at least one GPCC region (S303); encapsulating the entries of the at least one GPCC region to generate at least one non-sequential point cloud media of the static object (S304); sending MPD signaling of the at least one non-sequential point cloud media (S305); receiving a first request message sent by a video playback device; and sending a first non-sequential point cloud media. The entries of the GPCC region are used for representing GPCC components of a three-dimensional (3D) space region corresponding to the GPCC region, and the non-sequential point cloud media comprises an identifier of the static object. The present invention allows for a user to purposefully request non-sequential point cloud media of the same static object many times, improving the user experience.

## Description

This application claims priority to Chinese Patent Application No. 202011347626.1, entitled "METHOD AND APPARATUS FOR PROCESSING NON-TEMPORAL POINT CLOUD MEDIA, DEVICE, AND STORAGE MEDIUM" filed with the National Intellectual Property Administration, PRC on November 26, 2020, which is incorporated herein by reference in its entirety.

### FIELD OF THE TECHNOLOGY

Embodiments of the present disclosure relate to the field of computer technology, and in particular, to non-temporal point cloud media.

### BACKGROUND OF THE DISCLOSURE

At present, point cloud data of objects can be obtained through various means. A video production device may transmit point cloud data to a video playback device in a form of point cloud medium (media), i.e., point cloud media file(s). Thereby, the video playback device can play the point cloud media.

The point cloud data for the same object can be encapsulated into different point cloud media. For example, some point cloud media are complete point cloud media of the object, while some point cloud media are partial point cloud media of the object.

### SUMMARY

A method and an apparatus for processing non-temporal point cloud media, a device, and a storage medium are provided according to embodiments of the present disclosure. Thereby, a user can obtain non-temporal point cloud media of a same static object intentionally through multiple requests, which improves processing efficiency and user experience.

In one aspect, a method for processing non-temporal point cloud media is provided according to embodiments of the present disclosure. The method is executable by a video production device, and comprises: obtaining non-temporal point cloud data of a static object; processing the non-temporal point cloud data through Geometry-based Point Cloud Compression (GPCC) coding to obtain a GPCC bitstream; encapsulating the GPCC bitstream to generate at least one item of at least one GPCC region, where each item of each GPCC region is configured to represent a GPCC component of a three-dimensional (3D) spatial region corresponding to said GPCC region; encapsulating the at least one item of the at least one GPCC region to generate at least one non-temporal point cloud medium of the static object, where each of the at least one non-temporal point cloud medium comprises an identifier of the static object; transmitting media presentation description (MPD) signaling of the at least one non-temporal point cloud medium to a video playback device; receiving a first request message, which is transmitted by the video playback device according to the MPD signaling, where the first request message is for requesting a first non-temporal point cloud medium among the at least one non-temporal point cloud medium; and transmitting the first non-temporal point cloud medium to the video playback device according to the first request message.

In another aspect, another method for processing non-temporal point cloud media is provided according to embodiments of the present disclosure. The method is executable by a video playback device, and comprises: receiving MPD signaling of at least one non-temporal point cloud medium, where each of the at least one non-temporal point cloud medium comprises an identifier of a static object; transmitting a first request message to a video production device according to the MPD signaling, where the first request message is for requesting first non-temporal point cloud medium among the at least one non-temporal point cloud medium; receiving the first non-temporal point cloud medium from the video production device; and playing the first non-temporal point cloud medium; where the at least one non-temporal point cloud medium is generated by encapsulating at least one item of at least one GPCC region, the at least one item of the at least one GPCC region is generated by encapsulating a GPCC bitstream, the GPCC bitstream is obtained by processing non-temporal point cloud data of the static object through GPCC coding, and each item of each GPCC region is configured to represent a GPCC component of a 3D spatial region corresponding to said GPCC region.

In another aspect, an apparatus for processing non-temporal point cloud media is provided according to embodiments of the present disclosure, comprising a processing unit and a communication unit. The processing unit is configured to: obtain non-temporal point cloud data of a static object; process the non-temporal point cloud data through GPCC coding to obtain a GPCC bitstream; encapsulate the GPCC bitstream to generate at least one item of at least one GPCC region, where each item of each GPCC region is configured to represent a GPCC component of a 3D spatial region corresponding to said GPCC region; encapsulate the at least one item of the at least one GPCC region to generate at least one non-temporal point cloud medium of the static object, where each of the at least one non-temporal point cloud medium comprises an identifier of the static object; and transmit MPD signaling of the at least one non-temporal point cloud medium to a video playback device. The communication unit is configured to: receive a first request message, which is transmitted by the video playback device according to the MPD signaling, where the first request message is for requesting a first non-temporal point cloud medium among the at least one non-temporal point cloud medium; and transmit the first non-temporal point cloud medium to the video playback device according to the first request message.

In another aspect, another apparatus for processing non-temporal point cloud media is provided according embodiments of the present disclosure, comprising a processing unit and a communication unit. The communication unit is configured to: receive MPD signaling of at least one non-temporal point cloud medium, where each of the at least one non-temporal point cloud medium comprises an identifier of a static object; transmit a first request message to a video production device according to the MPD signaling, where the first request message is for requesting first non-temporal point cloud medium among the at least one non-temporal point cloud medium; receive the first non-temporal point cloud medium from the video production device. The processing unit is configured to play the first non-temporal point cloud medium. The at least one non-temporal point cloud medium is generated by encapsulating at least one item of at least one GPCC region, the at least one item of the at least one GPCC region is generated by encapsulating a GPCC bitstream, the GPCC bitstream is obtained by processing non-temporal point cloud data of the static object through GPCC coding, and each item of each GPCC region is configured to represent a GPCC component of a 3D spatial region corresponding to said GPCC region.

In another aspect, a video production device is provided, comprising a processor and a memory. The memory being configured to store a computer program, and the processor is configured to invoke and execute the computer program stored in the memory to perform the method according to the foregoing aspects.

In another aspect, a video playback device is provided, comprising a processor and a memory. The memory being configured to store a computer program, and the processor is configured to invoke and execute the computer program stored in the memory to perform the method according to the foregoing aspects.

In another aspect, a computer-readable storage medium is provided, configured to store a computer program, where the computer program is configured to cause a computer to perform the method according to the foregoing aspects.

In another aspect, a computer program product is provided according to embodiments of the present disclosure. The computer program product comprises instructions, and the instructions when executed on a computer cause the computer to perform the method according to the foregoing aspects.

In summary, herein the video production device can add the identifier of the static object into the non-temporal point cloud media when producing the non-temporal point cloud media through encapsulation. Accordingly, a user can obtain non-temporal point cloud media of a same static object intentionally through multiple requests, which improves experience of the user.

Moreover, herein the 3D spatial region corresponding to the item of the GPCC region may be divided into multiple spatial sub-regions. Hence, given that GPCC tiles can be encoded and decoded independently, the user can decode and present the non-temporal point cloud media with higher efficiency and lower latency.

Additionally, the video production device may combine multiple items of the GPCC region flexibly to construct different non-temporal point cloud media. Each non-temporal point cloud medium may constitute a complete GPCC frame or a partial GPCC frame, which improves flexibility of video production.

### BRIEF DESCRIPTION OF THE DRAWINGS

Figure 1 is a schematic architectural diagram of a system for processing non-temporal point cloud media according to an embodiment of the present disclosure.
Figure 2A is a schematic architectural diagram of a structure for processing non-temporal point cloud media according to an embodiment of the present disclosure.
Figure 2B is a schematic structural diagram of a sample according to an embodiment of the present disclosure.
Figure 2C is a schematic structural diagram of a container comprising multiple file tracks according to an embodiment of the present disclosure.
Figure 2D is a schematic structural diagram of a sample according to another embodiment of the present disclosure.
Figure 3 is a diagram of an interaction flow of processing non-temporal point cloud media according to an embodiment of the present disclosure.
Figure 4A is a schematic diagram of encapsulation of point cloud media according to an embodiment of the present disclosure.
Figure 4B is another schematic diagram of encapsulation of point cloud media according to an embodiment of the present disclosure.
Figure 5 is a schematic diagram of an apparatus 500 for processing non-temporal point cloud media according to an embodiment of the present disclosure.
Figure 6 is a schematic diagram of an apparatus 600 for processing non-temporal point cloud media according to an embodiment of the present disclosure.
Figure 7 is a schematic block diagram of a video production device 700 according to an embodiment of the present disclosure.
Figure 8 is a schematic block diagram of a video playback device 800 according to an embodiment of the present disclosure.

### DESCRIPTION OF EMBODIMENTS

Hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

In the specification, claims, and accompanying drawings of the present disclosure, the terms such as "first" and "second" are intended for distinguishing similar objects while not necessarily indicating a specific order or sequence. The concerning objects may be interchanged in an appropriate condition, so that the concerning embodiment of the present disclosure can be implemented in an order other than that illustrated or described herein. Moreover, the terms "comprise", "have", and any other variant are intended for covering non-exclusive inclusion. For example, a process, a method, a system, a product, or a device that comprises a list of steps or units is not necessarily limited to those steps or units, and may comprise another step or unit, which is not expressly listed or which is inherent to such process, method, product, or device.

Hereinafter relevant information are introduce first before illustrating technical solutions of the present disclosure.

A point cloud refers to a set of discrete points, which are arbitrarily distributed in a space and configured to represent a spatial structure and a surface attribute of a three-dimensional (3D) object or a 3D scene. Point-cloud data refers to a specific form of recording the point-cloud. Point cloud data of each point in the point cloud may comprise geometric information (that is, 3D positional information) and attribute information. The geometric information of each point in the point cloud refers to Cartesian 3D coordinates of the point. The attribute information of each point in the point cloud may include, but is not limited to, at least one of: a color, a material, or an intensity of laser reflection. Generally, all points in the point cloud have a same quantity of attributes. For example, each point in the point cloud has two attributes, which are the color and the intensity of laser reflection. As another example, each point in the point cloud has three attributes, which are the color, the material, and the intensity of laser reflection.

At present, a large volume of highly accurate point cloud data can be obtained at a lower cost within a short time, due to progress and development of science and technology. A manner for acquiring the point-cloud data may include, but is not limited to, at least one of the following means. (1) Generation via a computer device. The computer device may generate the point-cloud data according to a virtual 3D object and a virtual 3D scene. (2) Acquisition through 3D laser scanning. The point-cloud data of a statistic 3D object or a statistic 3D scene in the real world can be obtained through 3D laser scanning, and the point-cloud data may be acquired in millions of points per second. (3) Acquisition through 3D photogrammetry. A visual scene of the real world is acquired via a 3D photography device (that is, a set of cameras or a camera device with multiple lenses and multiple sensors) to obtain the point-cloud data of the visual scene, and point-cloud data of a dynamic 3D object or a dynamic 3D scene in the real world can be obtained through the 3D photography. (4) Acquisition of point-cloud data of a biological tissue/organ via a medical device. In the medical field, the point-cloud data of a biological tissue and a biological organ may be acquired via a medical device through magnetic resonance imaging (MRI), computed tomography (CT), and electromagnetic tracking, or the like.

A point cloud medium refers to a point cloud media file formed by point cloud data. The point cloud medium includes multiple media frames, and each media frame in the point cloud media is formed by point cloud data. The point cloud media can express a spatial structure and a surface property of 3D objects or 3D scenes flexibly and conveniently, and hence are widely applied to projects such as virtual reality (VR) games, computer aided design (CAD), a geographic information system (GIS), an autonomous navigation system (ANS), digital cultural heritage, free-viewpoint broadcasting, 3D immersive telepresence, and 3D reconstruction of biological tissues and organs.

A non-temporal point cloud medium is for a static object. That is, the point cloud media corresponding to the same static object are non-temporal.

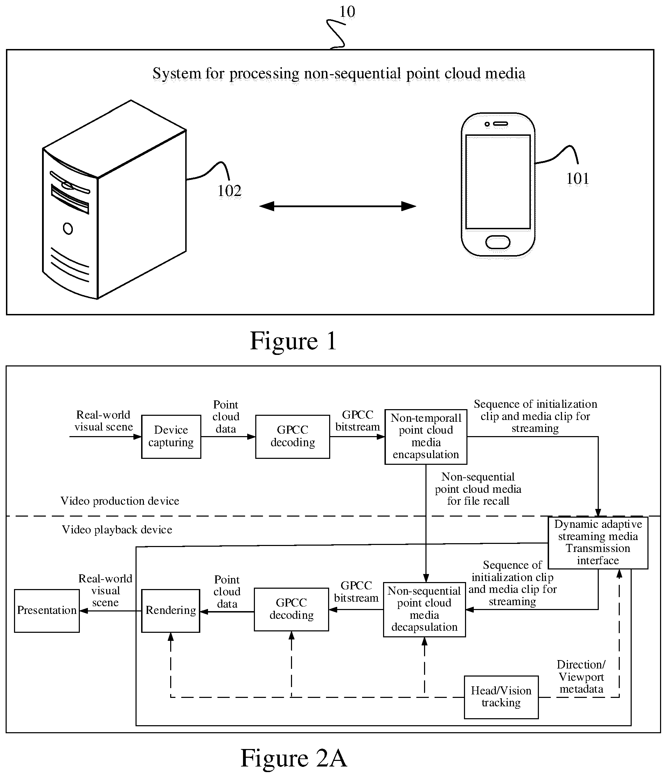

On a basis of the foregoing description, reference is made to Figure 1, which is a schematic architectural diagram of a system for processing non-temporal point cloud media according to an embodiment of the present disclosure. A system 10 for processing non-temporal point cloud media comprises a video playback device 101 and a video production device 102. The video production device is a computer device used by a provider of non-temporal point cloud media (for example, a content producer of the non-temporal point cloud media). The computer device may be a terminal (such as a personal computer (PC) or a smart mobile device (for example, a smartphone), a server, or the like. The video playback device is a computer device used by a user (for example, a consumer) of the non-temporal point cloud media. The computer device may be a terminal (for example, a PC), a smart mobile device (for example, a smartphone), a VR device (such as a VR headset or VR eyeglasses), or the like. The video production device and the video playback device may be directly or indirectly connected via wired or wireless communication, which is not limited herein.

Figure 2A is a schematic architectural diagram of a structure for processing non-temporal point cloud media according to an embodiment of the present disclosure. Hereinafter a solution for processing non-temporal point cloud media according to embodiments of the present disclosure is described in conjunction with the system as shown in Figure 1 and the structure as shown in Figure 2A. Processing non-temporal point cloud media includes processing at a side of the video production device and processing at a side of the video playback device. Specific processing is as follows.

### I. Processing at the side of the video production device

### (1) Obtaining point cloud data

In an implementation, the point cloud data may be obtained in two manners, i.e., capturing real-world visual scenes via a capturing device, and generating point cloud data through a computing device. In an implementation, the capturing device may be a hardware component deployed in the video production device. For example, the capturing device is a camera, a sensor, or the like, of a terminal. The capturing device may alternatively be a hardware apparatus connected to a content production device, for example, a camera connected to a server. The capturing device is configured to provide a service of obtaining point cloud data for the video production device. The capturing device may include, but is not limited to, any of: a camera device, a sensing device, or a scanning device. The camera device may include an ordinary camera, a stereo camera, a light field camera, or the like. The sensing device may include a laser device, a radar device, or the like. The scanning device may include a 3D laser scanning device or the like. There may be multiple capturing devices, which are deployed at specific locations in a real-world space to capture the point cloud data from different angles in such space. The captured point cloud data is synchronized both temporally and spatially. In another implementation, the computing device may generate the point cloud data according to a virtual 3D object or a virtual 3D scene. The point cloud data may be compressed and/or encoded in different manners due to the different manners of obtaining the point cloud data.

### (2) Encoding and encapsulating point cloud data

In an implementation, the video production device encodes the obtained point cloud data through the Geometry-based Point Cloud Compression (GPCC) coding or the Video-based Point Cloud Compression (VPCC) coding, and thereby obtains a GPCC bitstream or a VPCC bitstream of the point cloud data.

In an implementation, the GPCC coding is taken as an example. The video production device applies a file track to encapsulate the GPCC bitstream of the encoded point cloud data. The file track refers to a container for encapsulating the GPCC bitstream of the encoded point cloud data. The GPCC bitstream may be encapsulated into a single file track or into mutitple file tracks. Details of encapsulating the GPCC bitstream into the single file track and encapsulating the GPCC bitstream into the multiple file tracks are as follows.

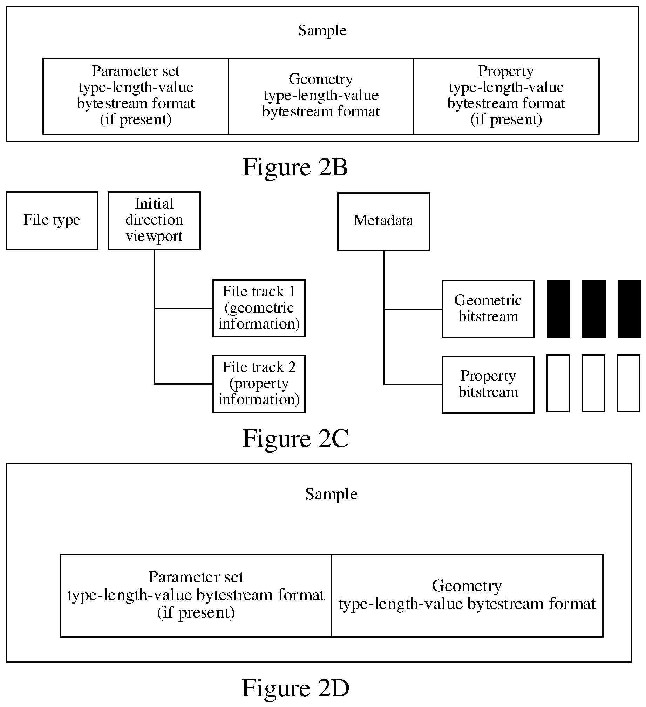

In a first case, the GPCC bitstream is encapsulated into the single file track. When the GPCC bitstream is transmitted via the single file track, the GPCC bitstream is required to assert and signal according to a transmission rule of the single file track. The GPCC bitstream encapsulated in the single file track requires to no further processing, and may be encapsulated in the International Organization for Standardization Base Media File Format (ISOBMFF). Specifically, each sample encapsulated in the single file track comprises one or more GPCC elements, each of which is also called a GPCC component. The GPCC component may be a GPCC geometric component or a GPCC attribute component. The sample refers to a set of one or more point-cloud encapsulation structures. That is, each sample comprises one or more type-length-value bytestream format (TLV) encapsulation structures. Figure 2B is a schematic structural diagram of a sample according to an embodiment of the present disclosure. As shown in Figure 2B, when being transmitted via the single file track, a sample in the file track comprises a GPCC parameter-set TLV, a geometric bitstream TLV, and an attribute bitstream TLV. The sample is encapsulated in the single file track.

In a second case, the GPCC bitstream is encapsulated into the multiple file tracks. When the encoded GPCC geometric bitstream and the encoded GPCC attribute bitstream are transmitted via different file tracks, each sample in the file tracks comprises at least one TLV encapsulation structure. The TLV encapsulation structure carries data of a single GPCC component, and does not comprises content of both the encoded GPCC geometric bitstream and the encoded GPCC attribute bitstream. Figure 2C is a schematic structural diagram of a container comprising multiple file tracks according to an embodiment of the present disclosure. As shown in Figure 2C, encapsulated package 1 transmitted via file track 1 comprises the encoded GPCC geometric bitstream but does not comprise the encoded GPCC attribute bitstream, and encapsulated package 2 transmitted via file track 2 comprises the encoded GPCC attribute bitstream but does not comprise the encoded GPCC geometric bitstream. During dedcoding, the video playback device decodes the encoded GPCC geometric bitstream first, and then decodes the encoded GPCC attribute bitstream according to the decoded geometric information. Hence, encapsulating different GPCC component bitstreams in separate file tracks enables the video playback device to access the file track carrying the encoded GPCC geometric bitstream before accessing the encoded GPCC attribute bitstream. Figure 2D is a schematic structural diagram of a sample according to another embodiment of the present disclosure. As shown in Figure 2D, when being transmitted via the multiple file tracks, the encoded GPCC geometric bitstream and the encoded GPCC attribute bitstream are transported in different file tracks. The sample in the file track comprises the GPCC parameter-set TLV and the geometric bitstream TLV, and does not comprise the attribute bitstream TLV. The sample may be encapsulated in any of the multiple file tracks.

In an implementation, the obtained point cloud data forms a non-temporal point cloud medium after being encoded and encapsulated by the video production device. The non-temporal point cloud medium may be a complete media file of the object, or may be a media clip of the object. In addition, the video production device uses media presentation description (MPD) (that is, a description signaling file) to record metadata of the encapsulation file of the non-temporal point cloud media according to a requirement of a file format of the non-temporal point cloud medium. The metadata is a generic term for information related to presentation of the non-temporal point cloud medium, and may include description information of the non-temporal point cloud medium, description information of a viewport, signaling information related to the presentation of the non-temporal point cloud medium, and the like. The video production device delivers the MPD to the video playback device, such that the video playback device can request the point cloud media according to the relevant information in the MPD. Specifically, the point cloud media and the MPD are delivered to the video playback device from the video production device through a transmission mechanism, such as the Dynamic Adaptive Streaming over HTTP (DASH) and the Smart Media Transport (SMT).

### II. Processing at the side of the video playback device

### (1) Decapsulating and decoding point cloud data

In an implementation, the video playback device may obtain the non-temporal point cloud medium through MPD signaling transmitted by the video production device. File decapsulation at the side of the video playback device is an inverse process with respect to the file encapsulation at the side of the video production device. The video playback device decapsulates the encapsulated file of the non-temporal point cloud medium according to the requirement of the file format of the non-temporal point cloud medium, and hence obtains an encoded bitstream (that is, the GPCC bitstream or the VPCC bitstream). Decoding at the side of the video playback device is an inverse process with respect to the encoding at the side of the video production device. The video playback device decodes the encoded bitstream to restore the point cloud data.

### (2) Rendering point cloud data

In an implementation, the video playback device renders the point cloud data, which is obtained through decoding the GPCC bitstream, according to the metadata relevant to rendering and the viewport in the MPD. The video playback device presents the visual scenes corresponding to the point cloud data when completing the rendering.

Herein the system for processing non-temporal point cloud media is described to clarify technical solutions according to embodiments of the present disclosure, and is not intended for limiting the technical solutions according to the embodiments of the present disclosure. Those skilled in the art can appreciate that these technical solutions are also applicable to similar technical problems even under evolved system architecture and newly emerged business scenario.

As described above, the point cloud data for a same object may be encapsulated into different point cloud media. For example, a point cloud medium is a complete point cloud medium of the object, and another point cloud media is a partial point cloud media of the object. Hence, a user may request playing different point cloud media while being unaware of whether the these point cloud media are of the same object, which results in an issue of blind requests. The non-temporal point cloud media of a static object also has the foregoing issue.

In order address the foregoing technical issue, an identifier of the static object is carried in the non-temporal point cloud media according to embodiments of the present disclosure. Hence, the user can obtain the non-temporal point cloud media of the same static object intentionally through multiple requests.

Hereinafter technical solutions of the present disclosure are described in detail.

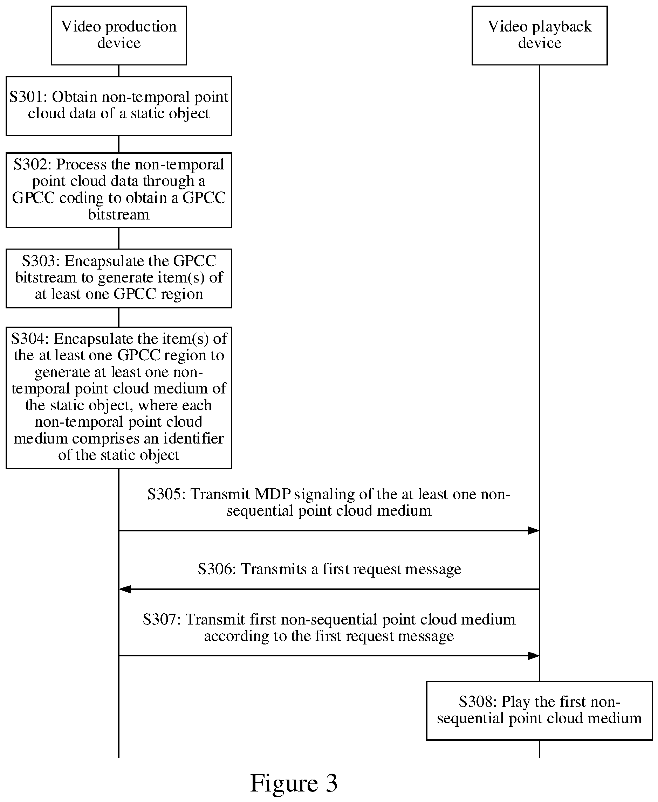

Figure 3 is a diagram of an interaction flow of processing non-temporal point cloud media according to an embodiment of the present disclosure. The method is performed by a video production device and a video playback device. As shown in Figure 3, the method comprises following steps S301 to S308.

In step S301, the video production device obtains non-temporal point cloud data of a static object.

In step S302, the video production device processes the non-temporal point cloud data through GPCC coding to obtain a GPCC bitstream.

In step S303, the video production device encapsulates the GPCC bitstream to generate at least one item of at least one GPCC region.

In step S304, the video production device encapsulates the at least one item of the at least one GPCC region to generate at least one non-temporal point cloud medium of the static object, where each non-temporal point cloud medium comprises an identifier of the static object.

In step S305, the video production device transmits MPD signaling of the at least one non-temporal point cloud medium to the video playback device.

In step S306, the video playback device transmits a first request message.

The first request message is transmitted by the video playback device according to the MPD signaling, and is for requesting first non-temporal point cloud medium among the at least one non-temporal point cloud medium.

In step S307, the video production device transmits the first non-temporal point cloud medium to the video playback device according to the first request message.

In step S308, the video playback device plays the first non-temporal point cloud medium.

A manner of obtaining the non-temporal point cloud data of the static object and obtaining the GPCC bitstream may refer to the foregoing relevant description, and details are not repeated herein.

Each item of each GPCC region is configured to represent a GPCC component of a 3D spatial region corresponding to such GPCC region.

Each GPCC region corresponds to one 3D spatial region of the static object. The 3D spatial region may be an entire 3D spatial region of the static object, or may be a partial 3D spatial region of the static object.

As described above, the GPCC component may be the GPCC geometric component or the GPCC attribute component.

At the side of the video production device side, the identifier of the static object may be defined by following codes.

```
 aligned(8) class ObjectInfoProperty extends ItemProperty('obif) {
              unsigned int(32) object_ID; }
```

ObjectInfoProperty indicates a property of content corresponding to the item. The property may be comprised in both the GPCC geometric component and the attribute component. In a case that only the GPCC geometry component comprises such property, the ObjectInfoProperty fields of all attribute components associated with the GPCC geometry component are identical to that of the GPCC geometry component.

```
 object_ID indicates the identifier of the static object. Items of dif-
 ferent GPCC regions of the same static object have the same object_ID.
```

In an embodiment, the identifier of the static object may be carried in the item related to the GPCC geometric component of the point cloud media, may be carried in an item related to the GPCC attribute component of the point cloud media, or may be carried in both an item related to the GPCC geometric component and an item related to the GPCC attribute component in the point cloud media, which is not limited herein.

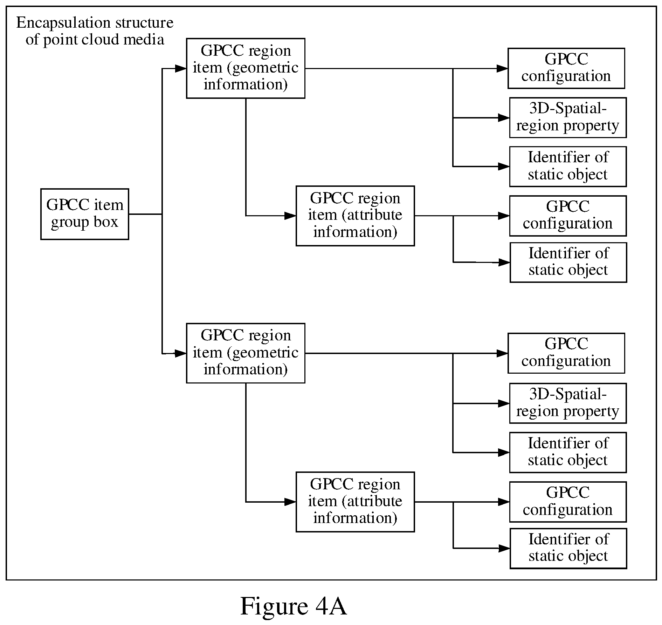

As an example, Figure 4A is a schematic diagram of encapsulation of point cloud media according to an embodiment of the present disclosure. As shown in Figure 4A, a point cloud medium comprises an item related to the GPCC geometric component and an item related to the GPCC attribute component. A GPCC item group box may be applied to associate the items in the point cloud media. As shown in Figure 4A, the item related to the GPCC geometric component is associated with the item related to the GPCC attribute component. The item related to the GPCC geometric component may comprise item properties, such as GPCC configuration, a property of the 3D spatial region (or ItemSpatialInfoProperty), and the identifier of the static object. The item related to the GPCC attribute component may comprise item properties, such as GPCC configuration and the identifier of the static object.

In an embodiment, the GPCC configuration signals configuration information of a decoder required for decoding the corresponding item and the information related to each GPCC component, which is not limited herein.

The item related to the GPCC attribute component may further comprise a property of the 3D spatial region, which is not limited herein.

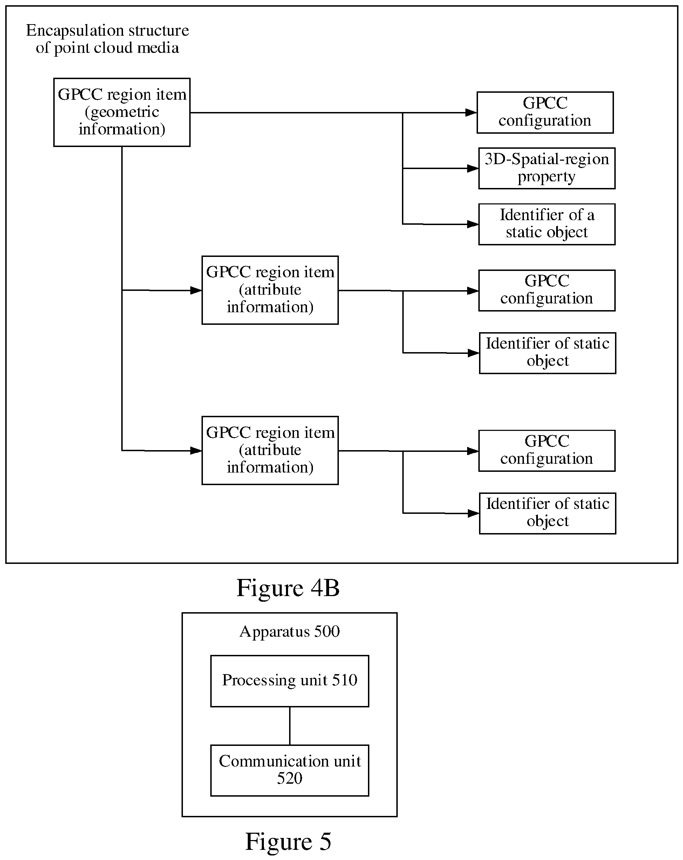

As an example, Figure 4B is another schematic diagram of encapsulation of point cloud media according to an embodiment of the present disclosure. Figure 4B differs from Figure 4A in that the point cloud media comprise an item related to the GPCC geometric component which is associated with two items related to the GPCC attribute component. Remaining details, such as each property comprised in the item related to the GPCC geometric component and each property comprised in the item related to the GPCC attribute component, may refer to Figure 4A and are not repeated herein.

The identifier of the static object may be carried in a property correspondingly comprised in an item of each GPCC region, which is not limited herein.

The MPD signaling may refer to the foregoing description, and is not repeated herein.

Optionally, any of the at least one non-temporal point cloud medium may be a complete point cloud medium or a partial point cloud medium of the static object.

It is to be understood that, the video playback device can transmit the first request message according to the MPD signaling, to request the first non-temporal point cloud medium.

In summary, herein the video production device can add the identifier of the static object into the non-temporal point cloud media when generating the non-temporal point cloud media through encapsulation. Thereby, a user can obtain non-temporal point cloud media of a same static object intentionally through multiple requests, which improves user experience.

In relevant techniques, item(s) of each GPCC region corresponds to only one 3D spatial region. Herein the 3D spatial region may be further divided, and hence a property of the item of the non-temporal point cloud media and the MPD signaling are correspondingly extended as follows.

In an embodiment, an item of a target GPCC region comprises an item property of the 3D spatial region, and the item property of the 3D spatial region comprises a first identifier and a second identifier. The target GPCC region is one of the at least one GPCC region. The first identifier (e.g., Sub_region_contained) is configured to signal whether a target 3D spatial region corresponding to the target GPCC region is divided into multiple spatial sub-regions. The second identifier (e.g., tile_id_present) is configured to signal whether GPCC coding is applied to the target GPCC region.

As an example, Sub_region_contained equal to 0 indicates that the target 3D spatial region corresponding to the target GPCC region is not divided into multiple spatial sub-regions, and Sub_region_contained equal to one indicates that the target 3D spatial region corresponding to the target GPCC region is divided into multiple spatial sub-regions.

As an example, tile_id_present equal to 0 indicates that the GPCC tile coding is not applied to the target GPCC region, and tile_id_present equal to 1 it indicates that the GPCC tile coding is applied to the target GPCC region.

tile_id_present is set to be 1when Sub_region_contained is equal to 1. That is, when the target 3D spatial region corresponding to the target GPCC region is divided into multiple spatial sub-regions, it is required to apply the GPCC tile coding at a side of the video production.

In an embodiment, the target 3D spatial region corresponding to the target GPCC region is divided into multiple spatial sub-regions, and the item property of the 3D spatial region further comprises, but is not limited to, information on the multiple spatial sub-regions and information on the target 3D spatial region.

In embodiment, for a spatial sub-region among the multiple spatial sub-regions, the information on the spatial sub-region comprises, but is not limited to, at least one of: an identifier of the spatial sub-region, positional information of the spatial sub-region, or an identifier of a tile (block) in the spatial sub-region when the GPCC tile coding is applied to the target GPCC region.

In an embodiment, the positional information of the spatial sub-region comprises, but is not limited to, a position of an anchor point of the spatial sub-region and lengths of the spatial sub-region along an x-axis, a y-axis, and a z-axis. Alternatively, the positional information of the spatial sub-region comprises, but is not limited to, positions of two anchor points of the spatial sub-region.

In embodiment, the information on the target 3D spatial region comprises, but is not limited to, at least one of: an identifier of the target 3D spatial region, positional information of the target 3D spatial region, or a quantity of spatial sub-regions comprised in the target 3D spatial region.

Optionally, the positional information of the target 3D spatial region comprises, but is not limited to, a position of an anchor point of the target 3D spatial region and lengths of the target 3D spatial region along an x-axis, a y-axis, and a z-axis. Alternatively, the positional information of the target 3D spatial region comprises, but is not limited to, positions of two anchor points of the target 3D spatial region.

In an embodiment, the target 3D spatial region corresponding to the target GPCC region is divided into multiple spatial sub-regions, and the item property of the 3D spatial region further comprises a third identifier (i.e., initial_region_id). The third identifier being equal to a first value or not present indicates that the video playback device selects, among the target 3D spatial region and the spatial sub-regions of the target 3D spatial region, to present the target 3D spatial region initially when the item corresponding to the target GPCC region is an item initially presented by the video playback device. The third identifier equal to a second value indicates that the video playback device selects, among the target 3D spatial region and the spatial sub-regions of the target 3D spatial region, to present the spatial sub-region corresponding to the second value initially when the item corresponding to the target GPCC region is an item initially presented by the video playback device.

In an embodiment, the first value is zero, and the second value is an identifier of the spatial sub-region which is in the target 3D spatial region and is to be initially presented.

In an embodiment, the target 3D spatial region corresponding to the target GPCC region is not divided into multiple spatial sub-regions, and the item property of the 3D spatial region further comprises information on the target 3D spatial region. In an embodiment, the information on the target 3D spatial region comprises, but is not limited to, at least one of: an identifier of the target 3D spatial region, positional information of the target 3D spatial region, an identifier of a tile in the target 3D spatial region when the GPCC tile coding is applied to the target GPCC region.

Details of the positional information of the target 3D spatial region may refer to the foregoing description, and are not repeated herein.

Hereinafter the extension of the item property of the non-temporal point cloud media is described in conjunction with codes.

```
 aligned(8) class ItemSpatialInfoProperty extends ItemProp-
 erty('gpis') {
              unsigned int(1) sub_region_contained;
              unsigned int(1) tile_id_present;
              bit(6) reserved;
              3DSpatialRegionStruct(1);
              unsigned int(16) inital_region_id;
              if(sub_region_contained == 1){
                   unsigned int(8) num_sub_regions;
                   for(int i=0; i<num_sub_regions; i++){
                        3DSpatialRegionStruct(1)
                        unsigned int(8) num_tiles;
                       for(int j=0; j<num_tiles; j++)
                         unsigned int(16) tile_id;
                   }
               }
              else{
                   if(tile_id_present == 1){
                        unsigned int(8) num_tiles;
                       for(int j=0; j<num_tiles; j++)
                         unsigned int(16) tile_id;
                   }
                   }
             }
              aligned(8) class 3DSpatialRegionStruct(dimension_included)
              {
              unsigned int(16) 3d_region_id;
              unsinged int(16) anchor_x;
              unsinged int(16) anchor_y;
              unsinged int(16) anchor_z;
            if (dimension_included)
               {
              unsinged int(16) region_dx;
                   unsinged int(16) region_dy;
                   unsinged int(16) region_dz;
            }
               }
```

Semantics of the foregoing fields are as follows.

ItemSpatialInfoProperty indicates the 3D spatial region property of the item of the GPCC region. Such property must be present in a case that the item corresponds to the geometric component. The 3D spatial region property may not be present in a case that the item corresponds to the attribute component.

sub_region_contained equal to 1 indicates that the 3D spatial region can be further divided into multiple spatial sub-regions. tile_id_present should be equal to 1 in a case that Sub_region_contained is equal to 1. sub_region_contained equal to 0 indicates that the 3D spatial region is not further divided into spatial sub-regions.

tile_id_present equal to 1 indicates that the GPCC tile coding is applied to the non-temporal point cloud data, and a tile ID corresponding to the non-temporal point cloud is given under this property.

inital_region_id indicates an ID of a spatial region initially presented within an overall space of the current item, in a case that the current item is an item initially consumed or played. Such field equal to 1 or not present indicates a region initially presented by the item is the overall 3D spatial region. Such field equal to an identifier of a spatial sub-region indicates that the region initially presented by the item is such spatial sub-region.

3DSpatialRegionStruct represents the 3D spatial region. The first 3DSpatialRegionStruct field in the ItemSpatialInfoProperty indicates the 3D spatial region corresponding to the item, which corresponds to such ItemSpatialInfoProperty. The remaining 3DSpatialRegionStruct field(s) indicate the spatial sub-regions in the 3D spatial region corresponding to the item.
num_sub_regions indicates a quantity of spatial sub-regions obtained by dividing the 3D spatial region corresponding to the item.
num_tiles indicates a quantity of tiles in the 3D spatial region corresponding to the item, or a quantity of tiles in the spatial sub-regions of the 3D spatial region.
tile_id indicates an identifier of a GPCC tile.
anchor_x, anchor_y, and anchor_z represent the x, y, and z coordinates, respectively, of an anchor point of the 3D spatial region or a spatial sub-region of the 3D spatial region.
region_dx, region_dy, and region_dz represent lengths of the 3D spatial region or a spatial sub-region of the 3D spatial region along the x-axis, the y-axis, and the z-axis, respectively.

In summary, hereinthe 3D spatial region may be divided into multiple spatial sub-regions. Given that GPCC tiles can be encoded and decoded independently, the user is capable to decode and present the non-temporal point cloud media with higher efficiency and lower latency.

As discussed above, the video production device may encapsulate the item(s) of the at least one GPCC region to generate at least one non-temporal point cloud medium of the static object. In a case that a quantity of items of the at least one GPCC region is one, the item is encapsulated into one non-temporal point cloud medium. In a case that a quantity of items of the at least one GPCC region is N, the N items are encapsulated into M non-temporal point cloud media. N is an integer greater than 1, and M an integer ranging from 1 to N. For example, the quantity of items of the at least one GPCC region is N, the N items are encapsulated into one non-temporal point cloud medium. In such case, the non-temporal point cloud medium comprises the N items. Alternatively, the N items may be encapsulated into N non-temporal point cloud media. In such case, each non-temporal point cloud medium comprises one item.

Hereinafter fields in a second non-temporal point cloud medium are described. The second non-temporal point cloud medium is any of at least one non-temporal point cloud medium, and comprises items of multiple GPCC regions.

In an embodiment, the second non-temporal point cloud media comprises a GPCC item group box (e.g., GPCCItemGroupBox). The GPCC item group box is configured to associate the items of multiple GPCC regions, as shown in Figure 4A and Figure 4B.

In an embodiment, the GPCC item group box comprises identifiers of the items of the multiple GPCC regions.

In an embodiment, the GPCC item group box comprises a fourth identifier (e.g., initial_item_ID). The fourth identifier is an identifier of an item initially presented by the video playback device among the items of the multiple GPCC regions.

In an embodiment, the GPCC item group box comprises a fifth identifier (e.g, partial_item_flag). The fifth identifier equal to a third value indicates that the items of the multiple GPCC regions constitute a complete GPCC frame of the static object. The fifth identifier equal to a fourth value indicates that the items of the multiple GPCC regions constitute a partial GPCC frame of the static object.

In an embodiment, the third value may be 0 and the fourth value may be 1, which is not limited herein.

In an embodiment, the GPCC item group box comprises positional information of a GPCC region constituted by the multiple GPCC regions.

As an example, the multiple GPCC regions are two regions which are R1 and R2, and the GPCC item group box comprises positional information of the region which is R1+R2.

Hereinafter fields in the foregoing GPCC item group box are described in conjunction with codes.

```
 aligned(8) class GPCCItemGroupBox
              extends EntityToGroupBox('gcig') {
              unsigned int(16) initial_item_ID;
              unsigned int(1) partial_item_flag;
              bit(7) reserved;
              if(partial_item_flag == 1){
                   3DSpatialRegionStruct(1); }
            }
```

The items comprised in GPCCItemGroupBox belong to a same static object, and are associated when presenting an object of consumption. All the items in GPCCItemGroupBox may constitute a complete GPCC frame or may be a part of a GPCC frame.
initial_item_ID indicates an identifier of an initially consumed item in an item group.
initial_item_ID is only valid when the current item group is an initial item group requested by the user. For example, the same static object corresponds to two point cloud media, i.e., F1 and F2. When the user requests F1 for the first time, initial_item_ID in an item group of F1 is valid. When the user requests F2 requested afterwards, initial_item_ID in F2 is invalid.
partial_item_flag equal to 0 indicates that all items in GPCCItemGroupBox and their associated items constitute a complete GPCC frame. partial_item_flag equal to 1 indiats that all items comprised in GPCCItemGroupBox and their associated items constitute only a partial GPCC frame.

In order to support the foregoing solutions, corresponding signaling messages also needs to be extended. As an example, MPD signaling is extended as follows.

A GPCC item descriptor is used to describe an element and a property related to a GPCC item, and the descriptor is a SupplementalProperty element.

@schemeIdUri property of the descriptor is equal to "urn:mpeg:mpegI:gpcc:2020:gpsr". The descriptor may be located at a level of an adaptation set or a representation.

The representation refers to a combination of one or more media components in the DASH. For example, a video file having a certain resolution may be considered as a representation.

The adaptation set refers to a set of one or more video streams in the DASH. One adaptation set may comprise multiple representations.

**Table 1 Element and property of GPCC item descriptor**

| Element and property of GPCC item descriptor | Specification | Data type | Description |
|---|---|---|---|
| gpim | 0..1 | gpcc:item | Container element, specifying a property of a GPCC item. |
| gpim@objectId | M | unsigned int | Object identifier property, indicating an object identifier of a GPCC item. |
| gpim.spatialRegion | 0..1 | gpcc:spatialRe-gionType | A property of this element defines a 3D spatial region corresponding to a GPCC item. |
| gpsr.spatialRe-gion@id | M | xs:unsignedShort | Identifier of a 3D spatial region, of which a value is identical to that of the 3d_region_id field in a corresponding ISOBMFF data box. |
| gpim.spatialRe-gion@x | OD | xs:int | x coordinate of an anchor point of a spatial region, default to be 0 when not present. |
| gpim.spatialRe-gion@y | OD | xs:int | y coordinate of an anchor point of a spatial region, default to be 0 when not present. |
| gpim.spatialRe-gion@z | OD | xs:int | z coordinate of an anchor point of a spatial region, default to be 0 when not present. |
| gpim.spatialRe-gion@dx | M | xs:int | Length of a spatial region along the x axis (i.e., a width), being negative indicates a length along a negative region of the x axis. |
| gpim.spatialRe-gion@dy | M | xs:int | Length of a spatial region along the y axis (i.e., a height), being negative indicates a length along a negative region of the y axis. |
| gpim.spatialRe-gion@dz | M | xs:int | Length of a spatial region along the z axis (i.e., a depth), being negative indicates a length along a negative region of the z axis. |
| gpim@tileIdFlag | O | bit(1) | Indicating whether a property of a GPCC item comprises tile ID information. |
| gpim@subRegion-Flag | O | bit(1) | Indicating whether a property of a GPCC item comprises information on spatial sub-region(s), being equal to 1 indicates that tileIdFlag is forced to be 1. |
| gpim.spatialRe-gion@tileIds | O | xs:UIntVectorType | |
| gpim.subSpatialRe-gion | 0..M | gpcc:spatialRe-gionType | A property of this element defines information on spatial sub-region(s) in a 3D spatial region corresponding to a GPCC item. |
| gpsr.subSpatialRe-gion@id | M | xs:unsignedShort | Identifier of a spatial sub-region in a 3D spatial region corresponding to a GPCC item, a value of which is identical to that of 3d_region_id field in a corresponding ISOBMFF data box. |
| gpim.subSpatialRe-gion@x | OD | xs:int | x coordinate of an anchor point of a spatial sub-region, default to be 0 when not present. |
| gpim.subSpatialRe-gion@y | OD | xs:int | y coordinate of an anchor point of a spatial sub-region, default to be 0 when not present. |
| gpim.subSpatialRe-gion@z | OD | xs:int | z coordinate of an anchor point of a spatial sub-region, default to be 0 when not present. |
| gpim.subSpatialRe-gion@dx | OD | xs:int | Length of a spatial sub-region along the x axis (i.e., a width), being negative indicates a |
| | | | length along a negative region of the x axis. |
| gpim.subSpatialRe-gion@dy | OD | xs:int | Length of a spatial sub-region along the y axis (i.e., a height), being negative indicates a length along a negative region of the y axis. |
| gpim.subSpatialRe-gion@dz | OD | xs:int | Length of a spatial sub-region along the z axis (i.e., a depth), being negative indicates a length along a negative region of the z axis. |
| gpim.subSpatialRe-gion@tileIds | OD | xs:UIntVectorType | GPCC tile ID list, representing a tile corresponding to a current spatial sub-region. |

In summary, herein the video production device can combine items of the multiple GPCC regions flexibly to form different non-temporal point cloud media. Each non-temporal point cloud medium may constitute a complete GPCC frame or a partial GPCC frame, which improves the flexibility of video production. In a case that one non-temporal point cloud medium comprises items of multiple of GPCC regions, the video production device can further improve the item that is initially presented.

Hereinafter embodiments are illustrated by taking a process as shown in Figure 3 as an example.

It is assumed that the video production device obtains non-temporal point cloud data of a certain static object, and the non-temporal point cloud data has 4 versions of point cloud media at the side of the video production device, i.e., point cloud media F0 corresponding to the complete non-temporal point cloud data, and point cloud media F1 to F3 each corresponding to a part of the non-temporal point cloud data. F1 to F3 correspond to the 3D spatial regions R1 to R3, respectively. On such basis, content encapsulated in the point cloud media F0 to F3 is as follows.

```
 F0: ObjectInfoProperty: object_ID=10;
            ItemSpatialInfoProperty: sub_region_contained=1; tile_id_pre-
            sent=1
            inital_region_id=1001;
            R0: 3d_region_id = 100, anchor=(0,0,0), region=(200,200,200)
            num_sub_regions = 3;
            SR1: 3d_region_id = 1001, anchor=(0,0,0), region=(100,100,200);
            num_tiles = 1, tile_id[]=(1);
            SR2: 3d_region_id = 1002, anchor=(100.0,0), re-
            gion=(100,100,200);
            num_tiles = 1, tile_id[]=(2);
            SR3: 3d_region_id = 1003, anchor=(0,100,0), re-
            gion=(200,100,200);
            num_tiles = 2, tile_id[]=(3.4);
            F1: ObjectInfoProperty: object_ID=10;
            ItemSpatialInfoProperty: sub_region_contained=0; tile_id_pre-
            sent=1;
            inital_region_id=0;
            R1: 3d_region_id = 101, anchor=(0.0,0), region=(100,100,200);
            num_tiles = 1, tile_id[]=(1);
            F2: ObjectInfoProperty: object_ID=10;
            ItemSpatialInfoProperty: sub_region_contained=0; tile_id_pre-
            sent=1;
            inital_region_id=0;
            R2: 3d_region_id = 102, anchor=(100.0,0), region=(100,100,200);
            num_tiles = 1, tile_id[]=(2);
            F3: ObjectInfoProperty: object_ID=10;
            ItemSpatialInfoProperty: sub_region_contained=0; tile_id_pre-
            sent=1; inital_region_id=0;
            R3: 3d_region_id = 103, anchor=(0,100,0), region=(200,100,200);
            num_tiles = 2, tile_id[]=(3.4);
```

The video production device further transmits MPD signaling of F0 to F3 to the user. Object_ID, the spatial region, the spatial sub-region, and the tile identifier information are the same as those in the foregoing file encapsulation, and details thereof are not repeated herein.

User U1 having good network conditions and low data transmission latency may request F0. User U2 has poor network conditions and high data transmission latency may request F1.

The video production device transmits F0 to a video playback device corresponding to user U1, and transmits F1 to a video playback device corresponding to user U2.

After the video playback device corresponding to user U1 receives F0, an initial viewing region is region SR1 corresponding a tile ID of 1. During decoding, a tile '1' may be separately directly decoded from the overall bitstream without decoding the entire file for presentation, which improves decoding efficiency and reduces time consumption of rendering and presentation. In a case that U1 continues to view region SR2 corresponding to the tile ID of 2, a part corresponding to the tile '2' in the overall bitstream is directly decoded for presentation.

After receiving F1, the video playback device corresponding to user U2 decodes F1 for consumption, and requests F2 or F3 in advance for caching according to a region that the user may consume next with reference to information in an MPD file, that is, Object_ID and spatial region information.

That is, after the video production device transmits the first non-temporal point cloud medium to the video playback device, the video playback device may further request the video production device again intentionally to transmit non-temporal point cloud media of the same static object according to a condition such as a consumption demand of the user and a candidate region for consumption.

In an implementation, after the step S307 of transmitting the first non-temporal point cloud medium to the video playback device according to the first request message, the method further comprises following steps.

A second request message transmitted by the video playback device based on the identifier of the static object is received, where the second request message is for requesting third non-temporal point cloud medium among the at least one non-temporal point cloud medium. The third non-temporal point cloud media is transmitted to the video playback device according to the second request message.

The video playback device has obtained the identifier of the static object in the point cloud medium (or media) as described above. Hence, when there is a need to obtain other point cloud media corresponding to the static object, the video playback device may obtain the point cloud media of the same static object intentionally through multiple requests according to the identifier of the static object.

It is assumed that the video production device obtains non-temporal point cloud data of a static object, and the non-temporal point cloud data has two versions of point cloud media at side of the video production device, i.e., F1 and F2. F1 comprises item1 and item2, and F2 comprises item3 and item4.

Content encapsulated in the point cloud media F1 and F2 is as follows.

```
            F1:
            item1: ObjectInfoProperty: object_ID=10; item_ID = 101
            ItemSpatialInfoProperty: sub_region_contained=0; tile_id_pre-
            sent=1
            inital_region_id=0;
            R1: 3d_region_id = 1001, anchor=(0.0,0), region=(100,100,200);
            num_tiles = 1, tile_id[]=(1);
            item2: ObjectInfoProperty: object_ID=10; item_ID = 102
            ItemSpatialInfoProperty: sub_region_contained=0; tile_id_pre-
            sent=1
            inital_region_id=0;
            R2: 3d_region_id = 1002, anchor=(100.0,0), region=(100,100,200);
            num_tiles = 1, tile_id[]=(2);
            GPCCItemGroupBox:
            initial_item_ID = 101; partial_item_flag=1;
            R1+ R2: 3d_region_id = 0001, anchor=(0.0,0), re-
            gion=(200,100,200);
            F2:
            item3: ObjectInfoProperty: object_ID=10; item_ID = 103
            ItemSpatialInfoProperty: sub_region_contained=0; tile_id_pre-
            sent=1
            inital_region_id=0;
            R3: 3d_region_id = 1003, anchor=(0,100,0), region=(100,100,200);
            num_tiles = 1, tile_id[]=(3);
            item4: ObjectInfoProperty: object_ID=10; item_ID = 104
            ItemSpatialInfoProperty: sub_region_contained=0; tile_id_pre-
            sent=1
            inital_region_id=0;
            R4: 3d_region_id = 1004, anchor=(100,100,0), re-
            gion=(100,100,200);
            num_tiles = 1, tile_id[]=(4);
            GPCCItemGroupBox:
            initial_item_ID = 103; partial_item_flag=1;
            R3+ R4: 3d_region_id = 0002, anchor=(0,100,0), re-
            gion=(200,100,200);
```

The video production device transmits MPD signaling of F1 and F2 to a user. Object_ID, the spatial region, the spatial sub-region, and the tile identifier information are the same as those in foregoing point cloud media encapsulation, and details thereof are not repeated herein.

User U1 requests consuming F1, and user U2 requests consuming F2.

The video production device transmits F1 to a video playback device corresponding to user U1, and transmits F2 to a video playback device corresponding to the user U2.

After the video playback device corresponding to user U1 receives F1, item1 is initially presented. An initial viewing region of item1 is an entire viewing space of item1. Therefore, user U1 consumes the overall item1. Since F1 comprises item1 and item2 corresponding to tile1 and tile2, respectively, a part of the bitstream corresponding to tile1 can be directly decoded for presentation when user U1 consumes item1. In a case that user U1 continues to consume and view a region of item2, which corresponds to a tile ID of 2, a part corresponding to the tile '2' in the whole bitstream is directly decoded for presentation. In a case that the U1 continues to consume and requires viewing a region corresponding to item3, F2 is requested according to the MPD file. After being received, F2 is presented and consumed directly according to a region viewed by the user, and information on an initially consumed item and information on an initially viewed region in are not determined again with respect to F2.

After the video playback device corresponding to user U2 receives F2, item3 is initially presented. An initial viewing region of item3 is an entire viewing space of item3. Therefore, user U2 consumes the overall item3. Since F2 comprises item3 and item4 corresponding to tile3 and tile4, respectively, a part of the bitstream corresponding to tile3 can be directly decoded for presentation when user U2 consumes item3.

Figure 5 is a schematic diagram of an apparatus 500 for processing non-temporal point cloud media according to an embodiment of the present disclosure. The apparatus 500 includes a processing unit 510 and a communication unit 520. The processing unit 510 is configured to: obtain non-temporal point cloud data of a static object; process the non-temporal point cloud data through GPCC coding to obtain a GPCC bitstream; encapsulate the GPCC bitstream to generate at least one item of at least one GPCC region, where each item of each GPCC region is configured to represent a GPCC component of a 3D spatial region corresponding to said GPCC region; encapsulate the at least one item of the at least one GPCC region to generate at least one non-temporal point cloud medium of the static object, where each of the at least one non-temporal point cloud medium comprises an identifier of the static object; and transmit MPD signaling of the at least one non-temporal point cloud medium to a video playback device. The communication unit 520 is configured to: receive a first request message, which is transmitted by the video playback device according to the MPD signaling, where the first request message is for requesting a first non-temporal point cloud medium among the at least one non-temporal point cloud medium; and transmit the first non-temporal point cloud medium to the video playback device according to the first request message.

In an embodiment, an item of a target GPCC region comprises a 3D-spatial-region item property, and the 3D-spatial-region item property comprises a first identifier and a second identifier. The target GPCC region is one of the at least one GPCC region. The first identifier is configured to signal whether a target 3D spatial region corresponding to the target GPCC region is divided into multiple spatial sub-regions. The second identifier is configured to signal whether GPCC coding is applied to the target GPCC region.

In an embodiment, the target 3D spatial region corresponding to the target GPCC region is divided into the multiple spatial sub-regions, and the 3D-spatial-region item property further comprises information on each of the multiple spatial sub-regions and information on the target 3D spatial region.

In an embodiment, the information on each of the multiple spatial sub-regions comprises at least one of: an identifier of said spatial sub-region, positional information of said spatial sub-region, or an identifier of a tile in said spatial sub-region when the GPCC tile coding is applied to the target GPCC region. The information on the target 3D spatial region comprises at least one of: an identifier of the target 3D spatial region, positional information of the target 3D spatial region, or a quantity of the spatial sub-regions comprised in the target 3D spatial region.

In an embodiment, the target 3D spatial region corresponding to the target GPCC region is divided into the multiple spatial sub-regions, the 3D-spatial-region item property further comprises a third identifier. The third identifier equal to a first value or being not present indicates that when the item of the target GPCC region is an item initially presented by the video playback device, the video playback device selects, among the target 3D spatial region and the multiple spatial sub-regions, to present the target 3D spatial region initially. The third identifier equal to a second value indicates that when the item of the target GPCC region is the item initially presented by the video playback device, the video playback device selects, among the target 3D spatial region and the multiple spatial sub-region, to present one of the multiple spatial sub-regions which corresponds to the second value initially.

In an embodiment, the target 3D spatial region corresponding to the target GPCC region is not divided into the multiple spatial sub-regions, and the 3D-spatial-region item property further comprises information on the target 3D spatial region.

In an embodiment, the information on the target 3D spatial region comprises at least one of: an identifier of the target 3D spatial region, positional information of the target 3D spatial region, or an identifier of a tile in the target 3D spatial region when the GPCC tile coding is applied to the target GPCC region.

In an embodiment, the processing unit 510 is further configured to: encapsulate, in a case that a quantity of the at least one item is one, the item into one non-temporal point cloud medium; and encapsulate, in a case that a quantity of the at least one item is N, the N items into one or more non-temporal point cloud media of which a quantity is M. N is an integer greater than 1, and M is an integer ranging from 1 to N.

In an embodiment, a second non-temporal point cloud medium comprises a GPCC item group box. The second non-temporal point cloud medium is one of the at least one temporal point cloud medium and comprises items of multiple GPCC regions. The GPCC item group box is configured to associate the items of the multiple GPCC regions.

In an embodiment, the GPCC item group box comprises a fourth identifier. The fourth identifier is an identifier of an item initially presented by the video playback device among the items of the multiple GPCC regions.

In an embodiment, the GPCC item group box comprises a fifth identifier. The fifth identifier equal to a third value indicates that the items of the multiple GPCC regions constitute a complete GPCC frame of the static object. The fifth identifier equal to a fourth value indicates that the items of the multiple GPCC regions constitute a partial GPCC frame of the static object.

In an embodiment, the GPCC item group box comprises positional information of a GPCC region formed by the multiple GPCC regions.

In an embodiment, the communication unit 520 is further configured to: receive a second request message, which is transmitted by the video playback device according to the identifier of the static object, where the second request message is for requesting third non-temporal point cloud medium among the at least one non-temporal point cloud medium; and transmit the third non-temporal point cloud medium to the video playback device according to the second request message.

The apparatus embodiments may correspond to the method embodiments, and similar description thereof may refer to the method embodiments. Details are not repeated herein for brevity. Specifically, the apparatus 500 as shown in Figure 5 may execute the embodiment of the foregoing method, and the foregoing and other operations and/or functions of the modules in the apparatus 500 are configured to perform the method embodiments corresponding to the video production device. Details are not repeated herein for brevity.

Hereinabove the apparatus 500 is described from a perspective of functional modules in conjunction with the drawings. The functional modules may be implemented in a form of hardware, may be implemented through instructions in a form of software, or may be implemented through a combination of software and hardware. Specifically, the steps of the method embodiments may be implemented through a hardware integrated logical circuit in a processor, or through the instructions in the form of software. The steps of the methods according to embodiments of the present disclosure may be directly performed and implemented through a hardware encoding processor, or may be performed and completed through a combination of hardware and software modules in the encoding processor. Optionally, the software modules may be located in a conventional storage medium in the field, such as a random access memory, a flash memory, a read-only memory, a programmable read-only memory, an electrically-erasable programmable memory, or a register. The storage medium is located in a memory. The processor reads information in the memory and implements the steps of the foregoing method embodiments with help of hardware thereof.

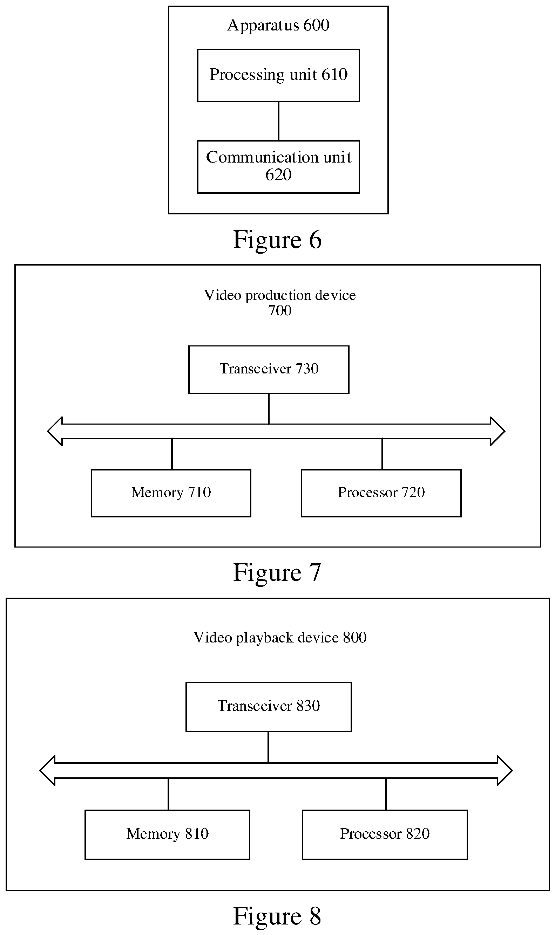

Figure 6 is a schematic diagram of an apparatus 600 for processing non-temporal point cloud media according to another embodiment of the present disclosure. The apparatus 600 comprises a processing unit 610 and a communication unit 620. The communication unit 610 is configured to: receive MPD signaling of at least one non-temporal point cloud medium, where each of the at least one non-temporal point cloud medium comprises an identifier of a static object; transmit a first request message to a video production device according to the MPD signaling, where the first request message is for requesting first non-temporal point cloud medium among the at least one non-temporal point cloud medium; receive the first non-temporal point cloud medium from the video production device. The processing unit 620 is configured to play the first non-temporal point cloud medium. The at least one non-temporal point cloud medium is generated by encapsulating at least one item of at least one GPCC region, the at least one item of the at least one GPCC region is generated by encapsulating a GPCC bitstream, the GPCC bitstream is obtained by processing non-temporal point cloud data of the static object through GPCC coding, and each item of each GPCC region is configured to represent a GPCC component of a 3D spatial region corresponding to said GPCC region.

In an embodiment, an item of a target GPCC region comprises a 3D-spatial-region item property, and the 3D-spatial-region item property comprises a first identifier and a second identifier. The target GPCC region is one of the at least one GPCC region. The first identifier is configured to signal whether a target 3D spatial region corresponding to the target GPCC region is divided into multiple spatial sub-regions. The second identifier is configured to signal whether GPCC coding is applied to the target GPCC region.

In an embodiment, the target 3D spatial region corresponding to the target GPCC region is divided into the multiple spatial sub-regions, and the 3D-spatial-region item property further comprises information on each of the multiple spatial sub-regions and information on the target 3D spatial region.

In an embodiment, the information on each of the multiple spatial sub-regions comprises at least one of: an identifier of said spatial sub-region, positional information of said spatial sub-region, or an identifier of a tile in said spatial sub-region when the GPCC tile coding is applied to the target GPCC region. The information on the target 3D spatial region comprises at least one of: an identifier of the target 3D spatial region, positional information of the target 3D spatial region, or a quantity of the spatial sub-regions comprised in the target 3D spatial region.

In an embodiment, the target 3D spatial region corresponding to the target GPCC region is divided into the multiple spatial sub-regions, the 3D-spatial-region item property further comprises a third identifier. The third identifier equal to a first value or being not present indicates that when the item of the target GPCC region is an item initially presented by the video playback device, the video playback device selects, among the target 3D spatial region and the multiple spatial sub-regions, to present the target 3D spatial region initially. The third identifier equal to a second value indicates that when the item of the target GPCC region is the item initially presented by the video playback device, the video playback device selects, among the target 3D spatial region and the multiple spatial sub-region, to present one of the multiple spatial sub-regions which corresponds to the second value initially.

In an embodiment, the target 3D spatial region corresponding to the target GPCC region is not divided into the multiple spatial sub-regions, and the 3D-spatial-region item property further comprises information on the target 3D spatial region.

In an embodiment, the information on the target 3D spatial region comprises at least one of: an identifier of the target 3D spatial region, positional information of the target 3D spatial region, or an identifier of a tile in the target 3D spatial region when the GPCC tile coding is applied to the target GPCC region.

In an embodiment, in a case that a quantity of the at least one item is one, the item is encapsulated into one non-temporal point cloud medium. In a case that a quantity of the at least one item is N, the N items are encapsulated into one or more non-temporal point cloud media of which a quantity is M. N is an integer greater than 1, and M is an integer ranging from 1 to N.

In an embodiment, a second non-temporal point cloud medium comprises a GPCC item group box. The second non-temporal point cloud medium is one of the at least one temporal point cloud medium which comprises items of multiple GPCC regions. The GPCC item group box is configured to associate the items of the multiple GPCC regions.

In an embodiment, the GPCC item group box comprises a fourth identifier. The fourth identifier is an identifier of an item initially presented by the video playback device among the items of the multiple GPCC regions.

In an embodiment, the GPCC item group box comprises a fifth identifier. The fifth identifier equal to a third value indicates that the items of the multiple GPCC regions constitute a complete GPCC frame of the static object. The fifth identifier equal to a fourth value indicates that the items of the multiple GPCC regions constitute a partial GPCC frame of the static object.

In an embodiment, the GPCC item group box comprises positional information of a GPCC region formed by the multiple GPCC regions.

Optionally, the communication unit 620 is further configured to transmit a second request message to the video production device according to the MPD signaling, and receive the second non-temporal point cloud medium.

Optionally, the processing unit 610 is further configured to play the second non-temporal point cloud medium.

The apparatus embodiments may correspond to the method embodiments, and similar description thereof may refer to the method embodiments. Details are not repeated herein for brevity. Specifically, the apparatus 600 as shown in Figure 6 may execute the embodiment of the foregoing method, and the foregoing and other operations and/or functions of the modules in the apparatus 600 are configured to perform the method embodiments corresponding to the video playback device. Details are not repeated herein for brevity.

Hereinabove the apparatus 600 is described from a perspective of functional modules in conjunction with the drawings. The functional modules may be implemented in a form of hardware, may be implemented through instructions in a form of software, or may be implemented through a combination of software and hardware. Specifically, the steps of the method embodiments may be implemented through a hardware integrated logical circuit in a processor, or through the instructions in the form of software. The steps of the methods according to embodiments of the present disclosure may be directly performed and implemented through a hardware encoding processor, or may be performed and completed through a combination of hardware and software modules in the encoding processor. Optionally, the software modules may be located in a conventional storage medium in the field, such as a random access memory, a flash memory, a read-only memory, a programmable read-only memory, an electrically-erasable programmable memory, or a register. The storage medium is located in a memory. The processor reads information in the memory and implements the steps of the foregoing method embodiments with help of hardware thereof.

Figure 7 is a schematic block diagram of a video production device 700 according to an embodiment of the present disclosure.

As shown in Figure 7, the electronic device 700 may comprise a memory 710 and a processor 720.

The memory 710 is configured to store a computer program 711, and transmit the computer program 711 to the processor 720. In other words, the processor 720 may invoke the computer program 711 from the memory 710 and execute the computer program to implement the method according to embodiments of the present disclosure.

For example, the processor 720 may be configured to perform the method embodiments according to instructions in the computer program.

In some embodiments, the processor 720 may include, but is not limited to a general purpose processor, a digital signal processor (DSP), an application-specific integrated circuit (ASIC), a field-programmable gate array (FPGA) or another programmable logic device, a discrete gate or a transistor logic device, or a discrete hardware component.

In some embodiments, the memory 710 includes, but is not limited to a volatile memory and/or a non-volatile memory.

The non-volatile memory may be a read-only memory (ROM), a programmable ROM (PROM), an erasable programmable read-only memory (EPROM), an electrically EPROM (EEPROM), or a flash memory. The volatile memory may be a random access memory (RAM), and serves as an external cache. As an example rather than a limitation, many forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM) and a direct rambus random access memory (DR RAM).

In some embodiments, the computer program 711 may be divided into one or more modules, and the one or more modules are stored in the memory 710 and are executed by the processor 720 to implement the method according to embodiments of the present disclosure. The one or more modules may be a series of instruction segments of a computer program, which are capable of implementing specific functions, and the instruction segments are configured to represent a process of executing the computer program in the video production device.

As shown in Figure 7, the electronic device 700 may further comprises a transceiver 730.

The transceiver 730 may be connected to the processor 720 or the memory 710.

The processor 720 may control the transceiver 730 to communicate with another device, and specifically may send information or data to the other device or receive information or data sent by the other device. The transceiver 730 may comprise a transmitter and a receiver. The transceiver 730 may further comprise an antenna, and a quantity of the antenna may be one or more.

Components in the electronic device 700 are connected via a bus system. Besides a data bus, the bus system may further include a power bus, a control bus, or a status signal bus.

Figure 8 is a schematic block diagram of a video playback device 800 according to an embodiment of the present disclosure.

As shown in Figure 8, the electronic device 800 may comprise a memory 810 and a processor 820.

The memory 810 is configured to store a computer program 811, and transmit the computer program 811 to the processor 820. In other words, the processor 820 may invoke the computer program 811 from the memory 810 and execute the computer program to implement the method according to embodiments of the present disclosure.

For example, the processor 820 may be configured to perform the method embodiments according to instructions in the computer program.

In some embodiments, the processor 820 may include, but is not limited to a general purpose processor, a DSP, an ASIC, a FPGA or another programmable logic device, a discrete gate or a transistor logic device, or a discrete hardware component.

In some embodiments, the memory 810 includes, but is not limited to a volatile memory and/or a non-volatile memory.

The non-volatile memory may be a ROM, a PROM, an EPROM, an EEPROM, or a flash memory. The volatile memory may be a RAM, and serves as an external cache. As an example rather than a limitation, many forms of RAMs may be used, for example, a SRAM, a DRAM, a SDRAM, a DDR SDRAM, an ESDRAM, a SLDRAM and a DR RAM.

In some embodiments, the computer program 811 may be divided into one or more modules, and the one or more modules are stored in the memory 810 and are executed by the processor 820 to implement the method according to embodiments of the present disclosure. The one or more modules may be a series of instruction segments of a computer program, which are capable of implementing specific functions, and the instruction segments are configured to represent a process of executing the computer program in the video playback device.

As shown in Figure 8, the electronic device 800 may further comprises a transceiver 830.

The transceiver 830 may be connected to the processor 820 or the memory 810.

The processor 820 may control the transceiver 830 to communicate with another device, and specifically may send information or data to the other device or receive information or data sent by the other device. The transceiver 830 may comprise a transmitter and a receiver. The transceiver 830 may further comprise an antenna, and a quantity of the antenna may be one or more.

Components in the electronic device 800 are connected via a bus system. Besides a data bus, the bus system may further include a power bus, a control bus, or a status signal bus.

In an aspect, a computer storage medium is provided according to embodiments of the present disclosure. The computer storage medium stores a computer program, and the computer program when executed by a computer causes the computer to perform the method in the foregoing method embodiments. Alternatively, a computer program product comprising instructions is provided according to an embodiment of the present disclosure. The instructions when executed by a computer cause the computer to perform the method in the foregoing method embodiments.

When an embodiment is implemented through software, the embodiment may be implemented completely or partially in a form of a computer program product. The computer program product comprises one or more computer instructions. When the computer program instructions are loaded and executed on the computer, the processes or functions according to embodiments of the present disclosure are wholly or partially implemented. The computer may be a general-purpose computer, a special-purpose computer, a computer network, or another programmable apparatus. The computer instructions may be stored in a computer-readable storage medium, or transmitted from a computer-readable storage medium to another computer-readable storage medium. For example, the computer instructions may be transmitted from a website, a computer, a server, or a data center to another website, another computer, another server, or another data center in a wired manner (for example, via a coaxial cable, an optical fiber, or a digital subscriber line (DSL)) or a wireless manner (for example, via infrared, radio wave, or microwave). The computer-readable storage medium may be any medium applicable to and accessible by a computer, or a data storage device, such as a server or a data center, integrating one or more applicable media. The applicable medium may be a magnetic medium (for example, a floppy disk, a hard disk, or a tape), an optical medium (for example, a digital video disc (DVD)), or a semi-conductive medium (for example, a solid state disk (SSD)).

Those skilled in the art can appreciate that the exemplary modules and algorithm steps described according to embodiments of the present disclosure may be implemented in electronic hardware, or a combination of computer software and electronic hardware. Whether the functions are executed in a manner of hardware or software depends on a particular application and a constraint condition of design in technical solutions. Those skilled in the art may use different means to implement the described functions for each particular application, and such implementation should be considered as not exceeding the scope of the present disclosure.

In the several embodiments of the present disclosure, a system, an apparatus, and a method that is disclosed may be implemented in other manners. For example, the described apparatus embodiments are merely examples. For example, division of the modules is merely based on logical functions, and there may be another manner of division manners in practical applications. For example, multiple modules or components may be combined or integrated into another system, or some features may be ignored or not performed. In addition, the displayed or discussed mutual couplings, direct couplings, communication connections may be implemented by using some interfaces. The indirect couplings or communication connections between apparatuses or modules may be electronic, mechanical, or in another form.

The modules described as separate components may or may not be physically separated, and the components displayed as modules may or may not be physical modules, i.e., may be located in one place or may be distributed over multiple network units. Some or all of the modules may be selected according to actual requirements to implement the objectives of the solutions of the embodiments. For example, functional modules in the embodiments of the present disclosure may be integrated into one processing module, or each of the modules may exist alone physically, or two or more modules may be integrated into one module.

The foregoing descriptions are merely specific implementations of the present disclosure, but are not intended to limit the protection scope of the present disclosure. Those skilled in the art may readily make variations or replacements within a technical scope disclosed in the present disclosure, and such variations or replacements shall fall within a protection scope of the present disclosure. Therefore, the protection scope of the present disclosure shall be subject to the protection scope of the claims.

## Claims

1. A method for processing non-temporal point cloud media, executable by a video production device, wherein the method comprises:
obtaining non-temporal point cloud data of a static object;
processing the non-temporal point cloud data through Geometry-based Point Cloud Compression (GPCC) coding to obtain a GPCC bitstream;
encapsulating the GPCC bitstream to generate at least one item of at least one GPCC region, wherein each item of each GPCC region is configured to represent a GPCC component of a three-dimensional (3D) spatial region corresponding to said GPCC region;
encapsulating the at least one item of the at least one GPCC region to generate at least one non-temporal point cloud medium of the static object, wherein each of the at least one non-temporal point cloud medium comprises an identifier of the static object;
transmitting media presentation description (MPD) signaling of the at least one non-temporal point cloud medium to a video playback device;
receiving a first request message, which is transmitted by the video playback device according to the MPD signaling, wherein the first request message is for requesting a first non-temporal point cloud medium among the at least one non-temporal point cloud medium; and
transmitting the first non-temporal point cloud medium to the video playback device according to the first request message.

2. The method according to claim 1, wherein:
an item of a target GPCC region comprises a 3D-spatial-region item property, and the 3D-spatial-region item property comprises a first identifier and a second identifier;
the target GPCC region is one of the at least one GPCC region;
the first identifier is configured to signal whether a target 3D spatial region corresponding to the target GPCC region is divided into a plurality of spatial sub-regions; and
the second identifier is configured to signal whether GPCC coding is applied to the target GPCC region.

3. The method according to claim 2, wherein:
the target 3D spatial region corresponding to the target GPCC region is divided into the plurality of spatial sub-regions, and
the 3D-spatial-region item property further comprises information on each of the plurality of spatial sub-regions and information on the target 3D spatial region.

4. The method according to claim 3, wherein:
the information on each of the plurality of spatial sub-regions comprises at least one of:
an identifier of said spatial sub-region,
positional information of said spatial sub-region, or
an identifier of a tile in said spatial sub-region when the GPCC tile coding is applied to the target GPCC region; and
the information on the target 3D spatial region comprises at least one of:
an identifier of the target 3D spatial region,
positional information of the target 3D spatial region, or
a quantity of the spatial sub-regions comprised in the target 3D spatial region.

5. The method according to any one of claims 2 to 4, wherein:
the target 3D spatial region corresponding to the target GPCC region is divided into the plurality spatial sub-regions, and the 3D-spatial-region item property further comprises a third identifier;
the third identifier equal to a first value or being not present indicates that when the item of the target GPCC region is an item initially presented by the video playback device, the video playback device selects, among the target 3D spatial region and the plurality of spatial sub-regions, to present the target 3D spatial region initially; and
the third identifier equal to a second value indicates that when the item of the target GPCC region is the item initially presented by the video playback device, the video playback device selects, among the target 3D spatial region and the plurality of spatial sub-region, to present one of the plurality of spatial sub-regions which corresponds to the second value initially.

6. The method according to claim 2, wherein the target 3D spatial region corresponding to the target GPCC region is not divided into the plurality spatial sub-regions, and the 3D-spatial-region item property further comprises information on the target 3D spatial region.

7. The method according to claim 6, wherein the information on the target 3D spatial region comprises at least one of:
an identifier of the target 3D spatial region,
positional information of the target 3D spatial region, or
an identifier of a tile in the target 3D spatial region when the GPCC tile coding is applied to the target GPCC region.

8. The method according to any one of claims 1 to 4, wherein encapsulating the at least one item of the at least one GPCC region to generate the at least one non-temporal point cloud medium of the static object comprises:
encapsulating, in a case that a quantity of the at least one item is one, the item into one non-temporal point cloud medium; and
encapsulate, in a case that a quantity of the at least one item is N, the N items into one or more non-temporal point cloud media of which a quantity is M;
wherein N is an integer greater than 1, and M is an integer ranging from 1 to N.

9. The method according to any one of claims 1 to 4, wherein:
a second non-temporal point cloud medium comprises a GPCC item group box;
the second non-temporal point cloud medium is one of the at least one temporal point cloud medium and comprises items of a plurality of GPCC regions; and
the GPCC item group box is configured to associate the items of the plurality of GPCC regions.

10. The method according to claim 9, wherein:
the GPCC item group box comprises a fourth identifier; and
the fourth identifier is an identifier of an item initially presented by the video playback device among the items of the plurality of GPCC regions.

11. The method according to claim 9, wherein:
the GPCC item group box comprises a fifth identifier;
the fifth identifier equal to a third value indicates that the items of the plurality of GPCC regions constitute a complete GPCC frame of the static object; and
the fifth identifier equal to a fourth value indicates that the items of the plurality of GPCC regions constitute a partial GPCC frame of the static object.

12. The method according to claim 9, wherein the GPCC item group box comprises positional information of a GPCC region formed by the plurality of GPCC regions.

13. The method according to any one of claims 1 to 4, wherein after transmitting the first non-temporal point cloud medium to the video playback device according to the first request message, the method further comprises:
receiving a second request message, which is transmitted by the video playback device according to the identifier of the static object, wherein the second request message is for requesting third non-temporal point cloud medium among the at least one non-temporal point cloud medium; and
transmitting the third non-temporal point cloud medium to the video playback device according to the second request message.

14. A method for processing non-temporal point cloud media, executable by a video playback device, wherein the method comprises:
receiving media presentation description (MPD) signaling of at least one non-temporal point cloud medium, wherein each of the at least one non-temporal point cloud medium comprises an identifier of a static object;
transmitting a first request message to a video production device according to the MPD signaling, wherein the first request message is for requesting first non-temporal point cloud medium among the at least one non-temporal point cloud medium;
receiving the first non-temporal point cloud medium from the video production device; and
playing the first non-temporal point cloud medium;
wherein the at least one non-temporal point cloud medium is generated by encapsulating at least one item of at least one Geometry-based Point Cloud Compression (GPCC) region, the at least one item of the at least one GPCC region is generated by encapsulating a GPCC bitstream, the GPCC bitstream is obtained by processing non-temporal point cloud data of the static object through GPCC coding, and each item of each GPCC region is configured to represent a GPCC component of a three-dimensional (3D) spatial region corresponding to said GPCC region.

15. The method according to claim 14, wherein:
an item of a target GPCC region comprises a 3D-spatial-region item property, and the 3D-spatial-region item property comprises a first identifier and a second identifier;
the target GPCC region is one of the at least one GPCC region;
the first identifier is configured to signal whether a target 3D spatial region corresponding to the target GPCC region is divided into a plurality of spatial sub-regions; and
the second identifier is configured to signal whether GPCC coding is applied to the target GPCC region.

16. The method according to claim 15, wherein:
the target 3D spatial region corresponding to the target GPCC region is divided into the plurality of spatial sub-regions, and
the 3D-spatial-region item property further comprises information on each of the plurality of spatial sub-regions and information on the target 3D spatial region.

17. The method according to claim 16, wherein:
the information on each of the plurality of spatial sub-regions comprises at least one of:
an identifier of said spatial sub-region,
positional information of said spatial sub-region, or
an identifier of a tile in said spatial sub-region when the GPCC tile coding is applied to the target GPCC region; and
the information on the target 3D spatial region comprises at least one of:
an identifier of the target 3D spatial region,
positional information of the target 3D spatial region, or
a quantity of the spatial sub-regions comprised in the target 3D spatial region.

18. The method according to any one of claims 15 to 17, wherein:
the target 3D spatial region corresponding to the target GPCC region is divided into the plurality spatial sub-regions, and the 3D-spatial-region item property further comprises a third identifier;
the third identifier equal to a first value or being not present indicates that when the item of the target GPCC region is an item initially presented by the video playback device, the video playback device selects, among the target 3D spatial region and the plurality of spatial sub-regions, to present the target 3D spatial region initially; and
the third identifier equal to a second value indicates that when the item of the target GPCC region is the item initially presented by the video playback device, the video playback device selects, among the target 3D spatial region and the plurality of spatial sub-region, to present one of the plurality of spatial sub-regions which corresponds to the second value initially.

19. The method according to claim 15, wherein the target 3D spatial region corresponding to the target GPCC region is not divided into the plurality spatial sub-regions, and the 3D-spatial-region item property further comprises information on the target 3D spatial region.

20. The method according to claim 19, wherein the information on the target 3D spatial region comprises at least one of:
an identifier of the target 3D spatial region,
positional information of the target 3D spatial region, or
an identifier of a tile in the target 3D spatial region when the GPCC tile coding is applied to the target GPCC region.

21. The method according to any one of claims 14 to 17, wherein:
in a case that a quantity of the at least one item is one, the item is encapsulated into one non-temporal point cloud medium; and
in a case that a quantity of the at least one item is N, the N items are encapsulated into one or more non-temporal point cloud media of which a quantity is M;
wherein N is an integer greater than 1, and M is an integer ranging from 1 to N.

22. The method according to any one of claims 14 to 17, wherein:
a second non-temporal point cloud medium comprises a GPCC item group box;
the second non-temporal point cloud medium is one of the at least one temporal point cloud medium and comprises items of a plurality of GPCC regions; and
the GPCC item group box is configured to associate the items of the plurality of GPCC regions.

23. The method according to claim 22, wherein:
the GPCC item group box comprises a fourth identifier; and
the fourth identifier is an identifier of an item initially presented by the video playback device among the items of the plurality of GPCC regions.

24. The method according to claim 22, wherein:
the GPCC item group box comprises a fifth identifier;
the fifth identifier equal to a third value indicates that the items of the plurality of GPCC regions constitute a complete GPCC frame of the static object; and
the fifth identifier equal to a fourth value indicates that the items of the plurality of GPCC regions constitute a partial GPCC frame of the static object.

25. The method according to claim 22, wherein the GPCC item group box comprises positional information of a GPCC region formed by the plurality of GPCC regions.

26. The method according to any one of claims 14 to 17, wherein after receiving the first non-temporal point cloud medium from the video production device, the method further comprises:
transmitting a second request message to the video production device based on the identifier of the static object according to the MPD signaling, wherein the second request message is for requesting a third non-temporal point cloud medium among the at least one non-temporal point cloud medium;
receiving the third non-temporal point cloud media from the video production device; and
playing the third non-temporal point cloud media.

27. An apparatus for processing non-temporal point cloud media, comprising a processing unit and a communication unit, wherein:
the processing unit is configured to:
obtain non-temporal point cloud data of a static object;
process the non-temporal point cloud data through Geometry-based Point Cloud Compression (GPCC) coding to obtain a GPCC bitstream;
encapsulate the GPCC bitstream to generate at least one item of at least one GPCC region, wherein each item of each GPCC region is configured to represent a GPCC component of a three-dimensional (3D) spatial region corresponding to said GPCC region;
encapsulate the at least one item of the at least one GPCC region to generate at least one non-temporal point cloud medium of the static object, wherein each of the at least one non-temporal point cloud medium comprises an identifier of the static object; and
transmit MPD signaling of the at least one non-temporal point cloud medium to a video playback device; and
the communication unit is configured to:
receive a first request message, which is transmitted by the video playback device according to the media presentation description (MPD) signaling, wherein the first request message is for requesting a first non-temporal point cloud medium among the at least one non-temporal point cloud medium; and
transmit the first non-temporal point cloud medium to the video playback device according to the first request message.

28. An apparatus for processing non-temporal point cloud media, comprising a processing unit and a communication unit, wherein:
the communication unit is configured to:
receive media presentation description (MPD) signaling of at least one non-temporal point cloud medium, wherein each of the at least one non-temporal point cloud medium comprises an identifier of a static object;
transmit a first request message to a video production device according to the MPD signaling, wherein the first request message is for requesting first non-temporal point cloud medium among the at least one non-temporal point cloud medium;
receive the first non-temporal point cloud medium from the video production device; and
the processing unit is configured to play the first non-temporal point cloud medium;
wherein the at least one non-temporal point cloud medium is generated by encapsulating at least one item of at least one Geometry-based Point Cloud Compression (GPCC) region, the at least one item of the at least one GPCC region is generated by encapsulating a GPCC bitstream, the GPCC bitstream is obtained by processing non-temporal point cloud data of the static object through GPCC coding, and each item of each GPCC region is configured to represent a GPCC component of a three-dimensional (3D) spatial region corresponding to said GPCC region.

29. A video production device, comprising a processor and a memory, wherein:
the memory is configured to store a computer program, and
the processor is configured to invoke and execute the computer program stored in the memory to perform the method according to any one of claims 1 to 13.

30. A video playback device, comprising a processor and a memory, wherein:
the memory is configured to store a computer program, and
the processor is configured to invoke and execute the computer program stored in the memory to perform the method according to any one of claims 14 to 26.

31. A computer-readable storage medium, configured to store a computer program, wherein the computer program is configured to cause a computer to perform the method according to any one of claims 1 to 13 or perform the method according to claims 14 to 26.

32. A computer program product, comprising instructions, wherein the instructions when executed on a computer cause the computer to perform the method according to any one of claims 1 to 13 or perform the method according to any one of claims 14 to 26.
